(19) Europäisches Patentamt / European Patent Office / Office européen des brevets

(11) **EP 2 621 660 B1**

(12) **EUROPEAN PATENT SPECIFICATION**

(45) Date of publication and mention
of the grant of the patent:
**20.09.2017 Bulletin 2017/38**

(51) Int Cl.:
**B23K 11/11** *(2006.01)*     **B23K 11/31** *(2006.01)*
**F16F 9/512** *(2006.01)*

(21) Application number: **11761077.4**

(22) Date of filing: **24.09.2011**

(86) International application number:
**PCT/EP2011/066625**

(87) International publication number:
**WO 2012/041787 (05.04.2012 Gazette 2012/14)**

(54) **METHOD OF AND APPARATUS FOR BALANCING AN ELECTRODE ARM OF A WELDING DEVICE WITH DETERMINATION OF DIFFERENTIAL BALANCE PRESSURE**

VERFAHREN UND VORRICHTUNG ZUM AUSGLEICH EINES ELEKTRODENARMS EINES SCHWEISSGERÄTS MIT BESTIMMUNG DES DIFFERENZIALAUSGLEICHDRUCKS

PROCÉDÉ ET APPAREIL D'ÉQUILIBRAGE D'UN BRAS D'ÉLECTRODE D'UN DISPOSITIF DE SOUDAGE AVEC DÉTERMINATION DE PRESSION D'ÉQUILIBRE DIFFÉRENTIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2010 US 388731 P**

(43) Date of publication of application:
**07.08.2013 Bulletin 2013/32**

(73) Proprietor: **Norgren GmbH**
**46519 Alpen (DE)**

(72) Inventors:
• **BRAUN, Florian**
  **D-73525 Gmuend (DE)**
• **HALACH, Thomas**
  **D-73099 Adelberg (DE)**
• **SCHNUR, Frank**
  **D-74357 Boennigheim (DE)**
• **SCHNEIDER-KONIG, Helmut**
  **D-73630 Remshalden (DE)**
• **LAUBACHER, Thomas**
  **D-71336 Waiblingen (DE)**

(74) Representative: **Gray, James et al**
**Withers & Rogers LLP**
**4 More London Riverside**
**London SE1 2AU (GB)**

(56) References cited:
**EP-A1- 1 657 018**     **WO-A1-2006/066528**
**US-A- 4 810 849**

**Description**

TECHNICAL FIELD

The present invention relates to welding methods and devices, and more particularly, to a method of balancing an electrode arm of a welding device and a welding device according to the preamble of claims 1 and 7 respectively.

BACKGROUND OF THE INVENTION

Welding devices, such as resistance spot welding devices, ultrasound welding devices, etc., are known in the art such as from European Patent 1 830 979, which is assigned on its face to the present applicants and is hereby incorporated by reference. Spot welding devices typically include two opposing electrode arms that are moved into position using two fluid operated actuators. One of the electrode arms is generally considered a "static" arm and movement is generally limited while the other electrode arm, called the "dynamic" arm moves a much greater distance to move into position to perform a welding operation. The first fluid operated actuator, often called a clamping actuator, is coupled to both electrode arms. The clamping actuator controls the general movement of the arms in order to contact the sheets to be welded. The second fluid operated actuator, often called a compensation actuator, is coupled to a stationary component, such as a robot arm and to the static electrode arm. The compensation actuator is actuated to maintain a constant force on the arms to avoid damaging the sheets. In other words, the compensation actuator counters the weight of the static arm to prevent the clamping action from bending the sheets. This so-called "weight compensation" is often maintained using the double acting actuator through a variable differential pressure between the two chambers of the compensation actuator.

As can be appreciated, the differential pressure required to maintain an appropriate weight balance of the static electrode arm changes for each weight force depending on the spatial orientation of the electrode arms. For example, if the robot arm moves the electrode arms such that the arms extend in a vertical orientation, the majority of the weight of the arms will not act to close the electrodes towards one another and thus, a smaller differential pressure is required to counter the weight of the electrode arms. Conversely, if the electrode arms extend in a horizontal direction, the weight of the arms acts to close the arms towards one another and thus, a larger differential pressure may be required to maintain a weight balance. Because of the change in weight compensation with respect to the spatial orientation, various differential pressures are used based on the spatial orientation of the electrode arms.

The prior art welding devices have attempted to maintain the proper force by accounting for the weight of the electrode arms in various spatial positions. However, the prior art has not adequately accounted for various external forces, such as frictional forces and/or the additional force applied to the compensation actuator due to the first fluid operated actuator as the welding arms are moved into position. Rather, the prior art assumes that the force necessary to maintain a balanced electrode arm position is only dependent upon the spatial position of the arms, *i.e.*, the weight of the arms.

Therefore, there is a need in the art for a method of determining various external forces acting on the fluid operated actuator in order to compensate for the various forces when determining an appropriate differential pressure required for the weight compensation of the electrode arms. The present invention overcomes these and other problems and an advance in the art is achieved.

A method for controlling a compensation cylinder unit known from the prior art is described in WO2006/066528A1 (representing the most relevant state of the art for the present invention), which relates to compensation cylinder unit that acts as a drive for an electrode arm of a welding device. A weld gun control device and method is disclosed by US4,810,849, which relates to a lab gun assembly provided with a belt gun which consistently performs the welding operation without damaging the surfaces of the members being welded.

SUMMARY OF THE INVENTION

A method of balancing an electrode arm of a welding device according to the present invention is defined in claim 1. A welding device according to the present invention is defined in claim 7, which includes a first electrode arm and a second electrode arm movable with respect to one another and coupled to a reference arm. The welding device can also include a compensation actuator coupled to the first electrode arm and to the reference arm to balance a weight of the first electrode arm, which includes first and second fluid chambers. According to the invention, the method comprises a step of adjusting a differential pressure between the first and second fluid chambers of the compensation actuator, and a step of determining a differential balance pressure required to balance the weight of the first electrode arm when the first electrode arm moves by more than a threshold amount.

The welding device comprises a first electrode arm and a second electrode arm movable with respect to one another and coupled to a reference arm. According to the present invention, the welding device further comprises a compensation actuator coupled to the first electrode arm and to the reference arm to balance a weight of the first electrode arm and including first and second fluid chambers and a control system including a processing system. The processing system is configured to adjust a differential pressure between the first and second fluid chambers of the compensation actuator. According to an embodiment of the invention, the processing system is further configured to determine a differential balance pressure required to balance the weight of the first electrode arm when the first electrode arm moves by more than a threshold amount.

Preferably, the method further comprises steps of:

pressurizing the compensation actuator to the differential balance pressure;
closing off the first and second fluid chambers from the pressurized fluid supply and from the exhaust for a predetermined amount of time;
determining a change in the differential pressure between the first and second fluid chambers due to pressurized fluid leakage from the first or the second fluid chamber; and
compensating the clamp pressure for the change in the differential pressure due to pressurized fluid leakage.

Preferably, the method further comprises a step of determining a differential compensation pressure based on the balance pressure and the clamp pressure, the differential compensation pressure comprising the differential pressure required between the first and second fluid chambers of the compensation actuator to balance the weight of the first electrode arm plus an additional force acting on the first electrode arm due to actuation of the clamping actuator.

Preferably, the step of adjusting the differential pressure comprises supplying pressurized fluid to at least one of the first or second fluid chambers.

Preferably, the step of adjusting the differential pressure comprises exhausting pressurized fluid from at least one of the first or second fluid chambers.

Preferably, the welding device further comprises a clamping actuator coupled to the first and second electrode arm, wherein the processing system is further configured to:

pressurize the compensation actuator to the differential balance pressure;
close off the first and second fluid chambers from a pressurized fluid supply and from an exhaust;
actuate the clamping actuator from a first position to a second position; and
determine a clamp pressure based on a change in the differential pressure between the first and second fluid chambers of the compensation actuator as the clamping actuator is actuated.

Preferably, the processing system is further configured to:

pressurize the compensation actuator to the differential balance pressure;
close off the first and second fluid chambers from the pressurized fluid supply and the exhaust for a predetermined amount of time;
determine a change in the differential pressure between the first and second fluid chambers due to pressurized fluid leakage from the first or the second fluid chamber; and
compensate the clamp pressure for the change in the differential pressure due to pressurized fluid leakage.

Preferably, the processing system is further configured to:

determine a differential compensation pressure based on the balance pressure and the clamp pressure, the differential compensation pressure comprising the differential pressure required between the first and second fluid chambers of the compensation actuator to balance the weight of the first electrode arm plus and additional force acting on the first electrode arm due to actuation of the clamping actuator.

Preferably, the processing system adjusts the differential pressure by supplying pressurized fluid to at least one of the first or second fluid chambers.

Preferably, the processing system adjusts the differential pressure by exhausting pressurized fluid from at least one of the first or second fluid chambers.

BRIEF DESCRIPTION OF THE DRAWINGS

FIG. 1 shows a diagrammatic representation of a welding device according to an embodiment of the invention.

FIG. 2 shows a compensation cylinder according to an embodiment of the invention.

FIG. 3 shows a pressure profile used to determine a balance pressure according to an embodiment of the invention.

FIG. 4 shows the compensation cylinder according to another embodiment of the invention.

FIG. 5 shows a pressure profile used to determine a clamp pressure according to an embodiment of the invention.

FIG. 6 shows a compensation pressure determination routine according to an embodiment of the invention.

## DETAILED DESCRIPTION OF THE INVENTION

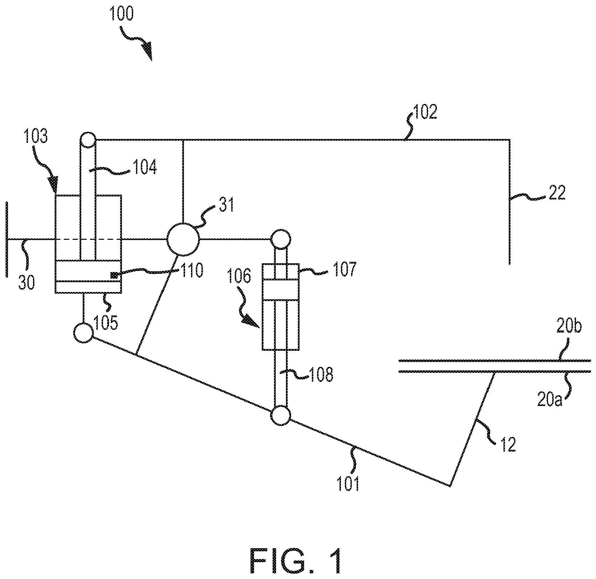

FIGS. 1 - 6 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims and their equivalents.

**FIG. 1** shows a diagrammatic representation of a welding device 100 according to an embodiment of the invention. The welding device 100 includes two electrode arms 101, 102, each of which includes an electrode 12, 22 used for welding sheets 20a, 20b as is generally known in the art. The electrode arms 101, 102 can be movable relative to one another. The electrode arms 101, 102 can be coupled to and are free to rotate about a reference arm 30. The reference arm 30 may comprise a stationary component or a movable component such as a robot arm. The electrode arms 101, 102 are shown coupled to the reference arm 30 at a pivot point 31, for example. For example, the electrode arms 101, 102 may be coupled to the reference arm 30 using a pivot pin or the like. The reference arm 30 can comprise a portion of a robot (not shown) that can move the welding device 100 into various spatial orientations in order to perform a welding operation on the welding sheets 20, for example.

According to an embodiment of the invention, the first electrode arm 101 comprises a "static" arm in that the arm 101 is maintained in a relatively constant position. According to an embodiment of the invention, the second electrode arm 102 comprises a "dynamic" arm that is moved into position using a clamping actuator 103. Therefore, according to an embodiment of the invention, once the reference arm 30 has moved the electrode arms 101, 102 into a desired position with respect to the sheets 20a, 20b, the electrode arm 101 can be moved into the position shown in FIG. 1 where the electrode 12 is contacting the sheet 20a. The electrode arm 101 may be moved into the position shown in FIG. 1 by actuating the clamping actuator 103, a compensation actuator 106, or a combination thereof. With the static electrode arm 101 contacting the sheet 20a, the dynamic electrode arm 102 can be actuated into a welding position by actuating the clamping actuator 103. In the welding position, the second electrode 22 may be in contact with the second sheet 20b.

The clamping actuator 103 is in the general form of a fluid operated actuator comprising a piston assembly 104 movable within a cylinder 105. The cylinder 105 is coupled to the first electrode arm 101 while the piston assembly 104 is coupled to the second electrode arm 102. According to an embodiment of the invention, the clamping actuator 103 is not coupled directly to the reference arm 30 as shown by the dashed lines in FIG. 1. Consequently, as the piston assembly 104 moves within the cylinder 105 in response to a pressurized fluid supply, the electrode arm 102 pivots about point 31 to either clamp down onto the sheets 20a, 20b or move away from the sheets 20a, 20b. The pressurized fluid supplied to the clamping actuator 103 may comprise a liquid or a gas. Typically, air is used, but the present invention should in no way be limited to air. The pressurized fluid supply used to supply the clamping actuator 103 with fluid is omitted from the drawing in order to reduce the complexity. The clamping actuator 103 can be actuated from a first position shown in FIG. 1 to a second position to move the electrode 22 into contact with the sheet 20b. Actuation of the clamping actuator 103 can be accomplished by supplying pressurized fluid to the cylinder 105 as is generally known in the art. The various fluid lines and valves are not shown in FIG. 1 in order to simplify the drawing. During actuation of the clamping actuator 103, the electrode arm 101 is maintained in a "floating" position where the weight of the electrode arm 101 is substantially balanced by the compensation actuator 106.

The compensation actuator 106 is provided to hold the electrode arm 101 in a "floating" position where the weight of the electrode arm 101 is balanced and the position remains substantially stationary. Therefore, according to an embodiment of the invention, the compensation actuator 106 can counter the weight force of the electrode arm 101. The compensation actuator 106 can thus maintain a desired contact force to prevent the sheets 20a, 20b from being bent as the clamping actuator 103 actuates the dynamic electrode arm 102 into the welding position. For example, if the weight of the electrode arm 101 is compensated, the clamping force experienced by the sheets 20a, 20b as the electrodes 12, 22 contact the sheets 20a, 20b can be controlled. Furthermore, because the electrode arms 101, 102 can rotate about point 31, the clamping force can be substantially balanced with respect to the sheets 20a, 20b.

According to an embodiment of the invention, a first portion of the compensation actuator 106 is coupled the reference arm 30 or some other fixed component while a second portion of the compensation actuator 106 is coupled to the electrode arm 101. In the embodiment shown, the cylinder 107 is coupled to the reference arm 30 while the piston assembly 108 is coupled to the electrode arm 101.

As discussed above, while prior art welding devices utilize the compensation cylinder to balance the weight of the electrode arms, the prior art systems do not adequately compensate for friction or additional forces caused by actuation of the clamping actuator 103. The discussion that follows explains how the present invention can account for both of these additional factors in order to provide a more stabilized electrode arm 101.

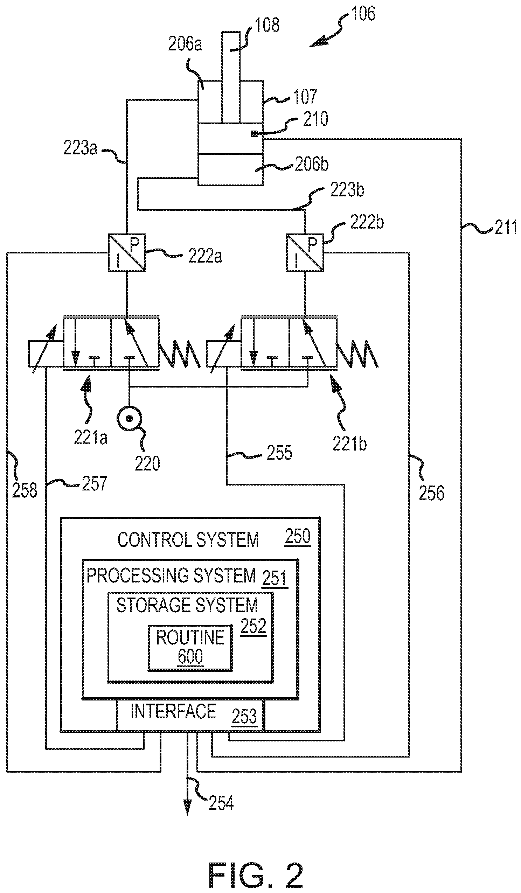

**FIG. 2** shows the compensation actuator 106 according to an embodiment of the invention. According to an embodiment of the invention, the piston assembly 108 separates the cylinder 107 into a first fluid chamber 206a and a second fluid chamber 206b. As shown in FIG. 2, the first and second fluid chambers 206a, 206b are selectively in fluid communication with a pressurized fluid source 220. The pressurized fluid source 220 may comprise a liquid or a gas. The particular fluid used to pressurize and operate the compensation actuator 106 should in no way limit the scope of the present invention. According to the embodiment shown, the first chamber 206a is in fluid communication with the pressurized fluid source 220 via a proportional valve 221a and a pressure sensor 222a, which are all fluidly coupled by a fluid line 223a. Likewise, the second chamber 206b is in fluid communication with the pressurized fluid source 220 via a second proportional valve 221b, and a second pressure sensor 222b, which are all fluidly coupled by a fluid line 223b. While the embodiment shown in FIG. 2 comprises two pressure sensors 222a, 222b that can determine the pressure in each of the fluid chambers 206a, 206b, it should be appreciated that in other embodiments, the pressure sensors 222a, 222b can be replaced with a differential pressure sensor that is in fluid communication with both the first and the second fluid chamber 206a, 206b. Furthermore, it should be appreciated that the first and second valves 221a, 221b could be replaced with a single 5/2 or 5/3-way valve such as shown in the '979 patent mentioned above. Therefore, those skilled in the art will readily recognize alternative configurations to the specific valve and sensor combination provided that fall within the scope of the present invention.

According to an embodiment of the invention, the control system 250 can actuate the proportional valves 221a, 221b as well as receive pressure signals from the pressure sensors 222a, 222b. The control system 250 can include an interface 253 and a processing system 251. The processing system 251 may include a storage system 252. The storage system 252 may comprise an internal memory as shown, or alternatively, may comprise an external memory. According to an embodiment of the invention, the interface 253 may perform any necessary or desired signal conditioning, such as any manner of formatting, amplification, buffering, etc. Alternatively, some or all of the signal conditioning may be performed by the processing system 251. While the interface 253 is shown in communication with the valves 221a, 221b and the pressure sensors 222a, 222b via lines 255, 256, 257, and 258, it should be appreciated that the interface 253 may be capable of electronic, wireless, or optical communication.

The processing system 251 can conduct operations of the control system 250. The processing system 251 can execute the data processing required to actuate the valves 221a, 221b and determine pressures from the pressure sensors 222a, 222b. The processing system 251 can also execute the data processing required to conduct the routine 600 described below. The routine 600 may be stored in the storage system 252, for example. The processing system 251 can comprise a general-purpose computer, a micro-processing system, a logic circuit, or some other general purpose or customized processing device. The processing system 251 can be distributed among multiple processing devices. The processing system 251 can include any manner of integral or independent electronic storage medium, such as the storage system 252.

It should be appreciated that the control system 250 may include various other components and functions that are generally known in the art. These additional features are omitted from the description and figures for the purpose of brevity. Therefore, the present invention should not be limited to the specific embodiments shown and discussed.

According to an embodiment of the invention, the control system 250 can actuate the first and second proportional valves 221a, 221b according to a user input received by the interface 253 over line 254. The line 254 may communicate with an external device such as a computer or separate controller, for example. Alternatively, the control system 250 can actuate the first and second proportional valves 221a, 221b based on a desired differential pressure stored in the storage system 251. For example, if a differential pressure is either received by the interface 253 or retrieved from the storage system 252, the control system 250 can actuate the valves 221a, 221b based on the pressures determined by the pressure sensors 222a, 222b.

As discussed above, one of the problems associated with welding devices is the ability to adequately maintain a suitable weight compensation for one or both of the electrode arms. According to an embodiment of the invention, improved weight compensation, or balancing, can be maintained according to the present invention. It is generally desirable to maintain a suitable differential pressure between the first and second fluid chambers 206a, 206b of the compensation actuator 106 in order to balance or counter the weight of the static electrode arm 101. As can be appreciated, the force needed to counter the weight of the static electrode arm 101 varies based on the spatial orientation of the welding device. Therefore, various differential pressures are required based on the particular spatial orientation of the welding device. Consequently, while the discussion below is limited to one specific spatial orientation, the compensation calibration discussed below may be repeated for additional spatial orientations.

According to an embodiment of the invention, the required differential pressure to counter the weight of the electrode arm 101 may vary based on the weight of the arm 101, the internal friction of the compensation actuator 106, and additional external forces, such as the additional force acting on the piston assembly 108 due to the actuation of the clamping actuator 103, for example. As can be appreciated from FIG. 1, if the clamping actuator 103 is actuated, and the piston assembly 104 extends further from the cylinder 105, an additional force acts on the piston assembly 108 of the compensation actuator 106. Therefore, a higher differential pressure may be required in the compensation actuator 106 to counter the weight of the electrode arm 101.

According to an embodiment of the invention, a balance pressure, $P_{balance}$, can be determined when the force acting on the compensation actuator 106 is substantially constant. For example, this may occur when the additional external force provided by the clamping actuator 103 is not acting on the compensation actuator 106 and rather, the differential pressure within the compensation actuator 106 is needed to counter the weight of the electrode arm 101. For example, the balance pressure, $P_{balance}$ can be determined when the welding device 100 is in the position shown in FIG. 1. The balance pressure, $P_{balance}$, therefore determines the differential pressure necessary to counter the weight of the electrode arm 101 in a given spatial orientation. The balance pressure, $P_{balance}$ also accounts for internal friction experienced by the compensation actuator 106.

According to an embodiment of the invention, the balance pressure, $P_{balance}$ can be determined by adjusting the differential pressure between the first fluid chamber 206a and the second fluid chamber 206b while the electrode arm 101 is in a first position, such as the position shown in FIG. 1. According to one embodiment of the invention, adjusting the differential pressure can be accomplished by supplying pressurized fluid to at least one of the first fluid chamber 206a or the second fluid chamber 206b, for example. If fluid is supplied to the first fluid chamber 206a, the differential pressure between the first and second fluid chambers 206a, 206b can be increased by actuating the first proportional valve 221a to open a fluid communication path between the pressurized fluid supply 220 and the first fluid chamber 206a. As the first proportional valve 221a is actuated, pressurized fluid will enter the first fluid chamber 206a, thereby increasing the pressure within the first fluid chamber 206a. It should be appreciated that the second fluid chamber 206b may be open to exhaust, or alternatively, may be supplied with a smaller amount of pressurized fluid. However, because of the substantially equally sized fluid chambers 206a, 206b (neglecting the size of the piston assembly extending through the first fluid chamber 206a), equivalent pressures will cancel. Therefore, the value of interest is the differential pressure between the first and second fluid chambers 206a, 206b.

According to another embodiment of the invention, adjusting the differential pressure between the first and second fluid chambers 206a, 206b can be accomplished by exhausting one or both of the first or second fluid chambers 206a, 206b. For example, the first fluid chamber 206a may be initially pressurized to a first level, which may be much greater than the pressure required to balance the electrode arm 101. The first proportional valve 221a can then be actuated to a second position to open a fluid communication path between the first fluid chamber 206a and the exhaust to decrease the pressure within the first fluid chamber 206a. Preferably, this process is performed without the sheets 20a, 20b in position in order to avoid damaging the sheets when the first fluid chamber 206a is initially pressurized.

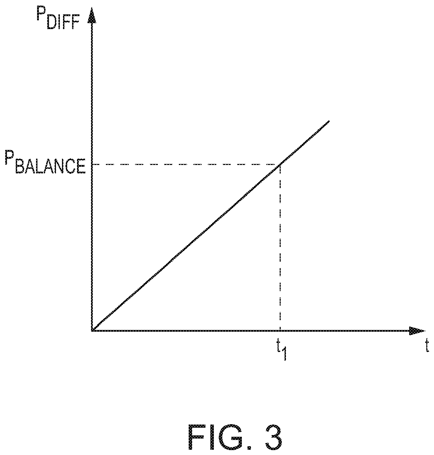

**FIG. 3** shows a graph of the differential pressure experienced between the first and second fluid chambers 206a, 206b as the differential pressure between the first fluid chamber 206a and the second fluid chamber 206b is adjusted. As explained above, the adjustment in differential pressure may be accomplished by supplying pressurized fluid to one of the first or second fluid chambers 206a, 206b faster than the other fluid chamber or alternatively, exhausting one of the fluid chambers 206a, 206b at a faster rate than the other fluid chamber. At time, $t_1$, the differential pressure reaches the balance pressure, $P_{balance}$. The balance pressure, $P_{balance}$ is the differential pressure at which the piston assembly 108 moves from the first position by more than a threshold amount. According to the present invention, the threshold amount accounts for any small movements not considered significant by the user or by the control system 250. Therefore, the balance pressure, $P_{balance}$ accounts for both the weight of the electrode arm 101 as well as internal friction experienced by the compensation actuator 106. The differential balance pressure, $P_{balance}$, therefore comprises the differential pressure required to balance the electrode arm 101 when the force acting on the electrode arm 101 is substantially constant.

According to an embodiment of the invention, the movement of the piston assembly 108 may be determined by a position sensor 210. The position sensor 210 may monitor the relative position of the piston assembly 108 with respect to the cylinder 107. The position sensor 210 may communicate with the control system 250 via line 211, for example. Alternatively, rather than coupling the position sensor 210 to the compensation actuator 106, the position sensor 210 may be coupled to the electrode arm 101 to determine when the electrode arm 101 moves. Position sensors are generally known in the art and therefore, a discussion of their specific operation is not provided for brevity of the description.

The balance pressure, $P_{balance}$, can maintain weight compensation of the static electrode arm 101 while the forces acting on the compensation actuator 106, and thus, the electrode arm 101 remains substantially constant. However, as discussed above, an additional external force is experienced by the compensation actuator 106 as the clamping actuator 103 is actuated from a first position to a second position. In FIG. 2, the additional force would be to push the piston assembly 108 further into the cylinder 107. As can be appreciated, if the balance pressure, $P_{balance}$ were maintained as the clamping actuator 108 applies the additional force, the piston assembly 108 would move within the cylinder 107 causing a decrease in the volume of the first fluid chamber 206a and an increase in the volume of the second fluid chamber 206b.

In the prior art systems, the proportional valves 221a, 221b would simply be actuated to remove some of the pressurized fluid in the first fluid chamber 206a and supply pressurized fluid to the second fluid chamber 206b to maintain the previously determined balance pressure. This would therefore have the effect of momentarily moving the static electrode arm 101 towards the sheets 20a, 20b. Once the clamping actuator 103 reaches its second actuated position, the additional force acting on the compensation actuator 106 stabilizes and the additional force acting on the compensation actuator 106 is removed. Once the additional force acting on the compensation actuator 106 is removed, the compensation actuator 106 may return to its original position and the balance pressure can be maintained. However, the temporary increase in the force acting on the compensation actuator 106 may cause the first electrode arm 101 to move towards the sheet 20a because the balance pressure is inadequate to counter the additional force of the clamping actuator 103. This movement may damage the sheet 20a. The present invention overcomes this problem.

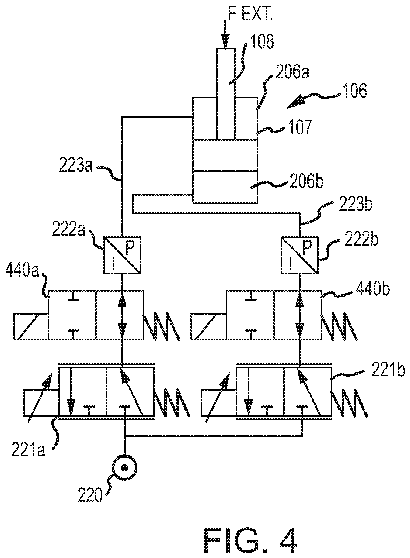

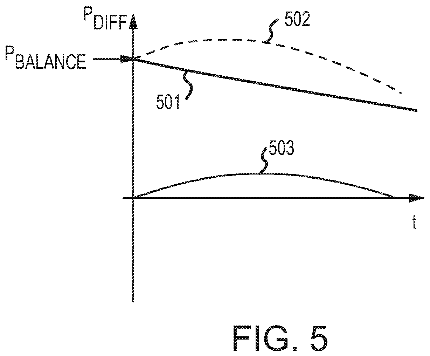

**FIGS. 4 & 5** show how the external force applied by actuation of the clamping actuator 103 to the compensation actuator 106 can be compensated. FIG. 4 shows the compensation actuator 106 according to another embodiment of the invention. The embodiment shown in FIG. 4 is similar to the embodiment shown in FIG. 2 except, the embodiment shown in FIG. 4 further includes first and second 2/2-way valves 440a, 440b. The first and second 2/2-way valves 440a, 440b allow the fluid chambers 206a, 206b to be substantially closed off from the pressurized fluid source 220 and the exhaust. It should be appreciated that the first and second 2/2-way valves 440a, 440b can be controlled using the control system 250 shown in FIG. 2. The control system 250 as well as the communication lines between the control system 250 and the valves and pressure sensors have been omitted from FIG. 4 in order to simplify the drawing. While first and second 2/2-way valves 440a, 440b are shown, it should be appreciated that in other embodiments, the proportional valves 221a, 221b may be replaced with 3/3-way proportional valves that are capable of closing the fluid communication path between the fluid chambers 206a, 206b and the pressurized fluid supply 220 as well as exhaust. Therefore, the present invention should not be limited to the specific valve combination shown, but rather, those skilled in the art will readily recognize suitable alternative valve arrangements.

With the balance pressure, $P_{balance}$ determined according to the method outlined above, the first and second fluid chambers 206a, 206b can be pressurized with the differential balance pressure. Once the chambers 206a, 206b are pressurized to the desired pressures, the first and second 2/2-way valves 440a, 440b can be actuated to substantially seal off the fluid chambers 206a, 206b, thereby preventing pressure from exhausting or being added to the first and second fluid chambers 206a, 206b. The first and second 2/2-way valves 440a, 440b can be kept in closed position for a predetermined amount of time. While the first and second 2/2-way valves 440a, 440b are closed, the differential pressure between the first and second fluid chambers 206a, 206b can be determined.

The results are shown in FIG. 5 with the pressure profile 501. As shown in FIG. 5, the differential pressure between the first and second fluid chambers 206a, 206b starts at the balance pressure, $P_{balance}$ and gradually decreases. While the differential pressure would ideally remain at the balance pressure due to the closed valves 440a, 440b, in some configurations, the differential pressure will decrease as some of the fluid leaks out of the actuator 106 or from the second fluid chamber 206a to the first fluid chamber 206b, thereby decreasing the differential pressure between the two chambers. As can be appreciated, if the first and second 2/2-way valves were not closed, the small change in the differential pressure would simply be compensated by actuating the second proportional valve 221b to maintain the appropriate differential pressure. Therefore, during normal operation, the small leakage will not typically affect the performance of the welding device 100. However, for purposes of determining the external force provided by the clamping actuator 103, any change in the differential pressure should be determined.

After the predetermined amount of time has elapsed, the first and second 2/2-way valves can be opened and the differential pressure can be returned to the balance pressure, $P_{balance}$ based on the differential pressure determined by the control system 250 from the signals received from the pressure sensors 222a, 222b. With the differential pressure returned to the balance pressure, $P_{balance}$, the first and second 2/2-way valves can be closed once again to close the first and second fluid chambers 206a, 206b off from both the pressurized fluid supply 220 as well as the exhaust.

According to an embodiment of the invention, with the first and second 2/2-way valves closed, the clamping actuator 103 can be actuated from the position shown in FIG. 1 to the first actuated position, thereby moving the second electrode arm 102 into the welding position as described above. The differential pressure experienced as the clamping actuator 103 is actuated can be determined, which is shown as the pressure profile 502. As shown, the differential pressure between the first and second fluid chambers 206a, 206b initially increases as the clamping actuator 103 is being actuated to the second position to bring the electrode arm 102 into the welding position. Once the clamping actuator 103 reaches its second position, the piston assembly 108 stops moving and the differential pressure between the two fluid chambers 206a, 206b begins to decrease due to leakage as discussed above.

According to an embodiment of the invention, an increased differential pressure between the first and second fluid chambers 206a, 206b required to compensate for the external force applied to the compensation actuator 106 by the actuation of the clamping actuator 103 can be determined by determining the difference between the pressure profiles 501, 502. The difference is shown as a pressure profile 503, which comprises a clamp pressure $P_{clamp}$. The clamp pressure, $P_{clamp}$ 503 represents the additional differential pressure required during actuation of the clamping actuator 103. The change in the clamp pressure, $P_{clamp}$ required may be tracked as a function of time or as a function of position of the piston assembly 104 with respect to the cylinder 105, for example. As can be appreciated, the clamp pressure, $P_{clamp}$ already accounts for the loss in differential pressure due to leakage. The reason is that the loss is already taken into account by maintaining the differential balance pressure. Therefore, while some embodiments may not take changes in differential pressure due to leakage into account, the clamp pressure, $P_{clamp}$ determined in these embodiments may not fully account for the additional force required to compensate for the clamping force acting on the compensation actuator 106. Rather, the determined clamping force will be lower than the actual clamping force.

According to an embodiment of the invention, a compensation differential pressure, $P_{compensation}$ required between the first and second fluid chambers 206a, 206b can be determined based on the balance pressure, $P_{balance}$ and the clamp pressure, $P_{clamp}$ as shown by equation (1).

$$P_{balance} + P_{clamp} = P_{compensation} \qquad\qquad (1)$$

The compensation pressure, $P_{compensation}$ is the differential pressure required by the compensation actuator 106 to maintain weight compensation of the first static electrode arm 101. The compensation pressure may be determined by the control system 250, for example. The compensation pressure, thus maintains appropriate weight compensation when the clamping actuator is de-actuated as well as when the clamping actuator is being actuated to bring the dynamic electrode arm 102 into a welding position. This is in contrast to the prior art welding devices that do not adequately maintain proper weight compensation during actuation of the clamping actuator 103, but rather only before and after the clamping actuator is actuated. Therefore, the sheets 20a, 20b may be subjected to undue forces during actuation of the clamping actuator, which may bend and damage the sheets. The compensation pressure may thus change over time based on the external forces applied to the compensation actuator 106 by the clamping actuator 103.

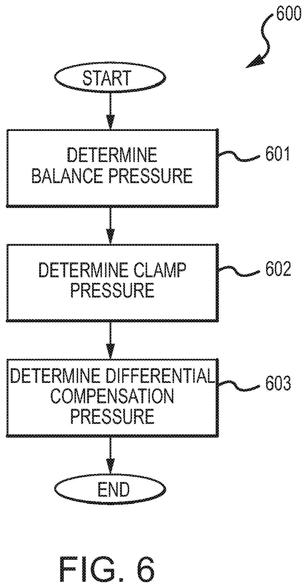

**FIG. 6** shows a compensation pressure determination routine 600 according to an embodiment of the invention. The compensation pressure determination routine 600 may be conducted by the control system 250 for example. Alternatively, the compensation pressure determination routine 600 may be conducted manually by a user or operator. The compensation pressure determination routine 600 provides a method for determining an ideal compensation pressure to adequately maintain a weight balance for the static electrode arm 101 of the welding device 100.

In step 601, a balance pressure is determined for the compensation actuator 106. As discussed above, the balance pressure may be determined by adjusting the differential pressure between the first and second fluid chambers 206a, 206b. The adjustment in the differential pressure may be performed by supplying or exhausting one or both of the fluid chambers 206a, 206b. According to an embodiment of the invention, the control system 250 may adjust the differential pressure between the first and second fluid chambers 206a, 206b by actuating one or both of the proportional valves 221a, 221b, for example. According to an embodiment of the invention, the balance pressure is determined as the differential pressure between the first and second chambers 206a, 206b when the piston assembly 108 or the electrode arm 101 moves by more than a threshold amount. As discussed above, movement may be sensed by the control system 250 based on a signal from a position sensor 210 coupled to the compensation actuator 106 or the electrode arm 101, for example. The balance pressure, $P_{balance}$ may be stored in the storage system 252 for later processing by the processing system 251, for example. Alternatively, a user or operator can record the balance pressure.

In step 602, a clamp pressure can be determined according to an embodiment of the invention. As discussed above, the clamp pressure comprises the differential pressure required to compensate for actuation of the clamping actuator 103 in addition to the balance pressure, $P_{balance}$. According to an embodiment of the invention, the clamp pressure can be determined by pressurizing the compensation actuator 106 to the differential balance pressure determined in step 601. The leakage of the compensation actuator 106 can optionally be determined by closing off the first and second fluid chambers 206a, 206b and determining a change in the differential pressure over a predetermined time to generate a first pressure profile 501. The control system 250 can once again pressurize the compensation actuator 106 to the differential balance pressure and the first and second fluid chambers 206a, 206b can be closed off. The clamping actuator 103 can then be actuated from the first position to the second position. As the clamping actuator 103 is actuated, the differential pressure between the first and second fluid chambers 206a, 206b of the compensation actuator 106 will change due to movement of the piston assembly 108. The change in differential pressure can be determined to generate a second pressure profile 502. The clamp pressure can be determined based on a difference between the first and second pressure profiles. For example, the clamp pressure may not comprise a single value, but rather may change over time as the clamping actuator 103 is being actuated. Alternatively, the change in the clamp pressure may be tracked as a function of a clamping actuator 103 position, such as sensed by a position sensor 110 shown in FIG. 1. It should be appreciated that rather than coupling the position sensor 110 to the clamping actuator 103, in other embodiments the position sensor 110 may be coupled to the electrode arm 102, for example. The position sensor 110 may be in communication with the control system 250, for example in a similar manner to the position sensor 210.

In step 603, the differential compensation pressure can be determined. The differential compensation pressure can be determined based on the balance pressure and the clamp pressure, for example. Therefore, the differential compensation pressure may change as a function of time due to the change in the clamp pressure, for example.

According to an embodiment of the invention, with the differential compensation pressure determined, the control system 250 can actuate the first and second proportional valves 221a, 221b in order to maintain the differential compensation pressure during a welding process. As can be appreciated, the differential compensation pressure may vary as the clamping actuator 103 is being actuated. Therefore, as the control system 250 actuates the clamping actuator 103 in preparation for the welding operation, the control system 250 can actuate the first and second proportional valves 221a, 221b to adjust the differential pressure between the first and second fluid chambers 206a, 206b.

The method and system provided above determines a differential compensation pressure required to maintain weight balance of the static electrode arm 101 of a welding device 100. The method advantageously accounts for a change in the required differential pressure due to actuation of the clamping actuator 103, for example.

The detailed descriptions of the above embodiments are not exhaustive descriptions of all embodiments contemplated by the inventors to be within the scope of the invention.

Thus, although specific embodiments of, and examples for, the invention are described herein for illustrative purposes, various equivalent modifications are possible within the scope of the invention, as those skilled in the relevant art will recognize. The teachings provided herein can be applied to other fluid operated actuators, and not just to the embodiments described above and shown in the accompanying figures. Accordingly, the scope of the invention should be determined from the following claims.

## Claims

1. A method of balancing an electrode arm (101, 102) of a welding device (100) including a first electrode arm (101) and a second electrode arm (102) movable with respect to one another and coupled to a reference arm (30), and a compensation actuator (106) coupled to the first electrode arm (101) and the reference arm (30) to balance a weight of the first electrode arm (101) and including first and second fluid chambers (206a, 206b), and a control system (250), the method being **characterised by** the following steps of:

   adjusting a differential pressure between the first and second fluid chambers (206a, 206b) of the compensation actuator (106); and
   determining a differential balance pressure required to balance the weight of the first electrode arm (101), as the first electrode arm (101) moves by more than a threshold amount, said threshold amount accounting for any small movements not considered significant by the user or by the control system (250).

2. The method of claim 1, wherein the welding device (100) further comprises a clamping actuator (103) coupled to the first and second electrode arms (101, 102) with the method further comprises steps of:

   pressurizing the compensation actuator (106) to the differential balance pressure;
   closing off the first and second fluid chambers (206a, 206b) from a pressurized fluid supply and from an exhaust;
   actuating the clamping actuator (103) from a first position to a second position; and
   determining a clamp pressure based on a change in the differential pressure between the first and second fluid chambers (206a, 206b) of the compensation actuator (106) as the clamping actuator (103) is actuated.

3. The method of claim 2, further comprising steps of:

   pressurizing the compensation actuator (106) to the differential balance pressure;
   closing off the first and second fluid chambers (206a, 206b) from the pressurized fluid supply and from the exhaust for a predetermined amount of time;
   determining a change in the differential pressure between the first and second fluid chambers (206a, 206b) due to pressurized fluid leakage from the first or the second fluid chamber; and
   compensating the clamp pressure for the change in the differential pressure due to pressurized fluid leakage.

4. The method of claim 2, further comprising a step of determining a differential compensation pressure based on the balance pressure and the clamp pressure, the differential compensation pressure comprising the differential pressure required between the first and second fluid chambers (206a, 206b) of the compensation actuator (106) to balance the weight of the first electrode arm (101) plus an additional force acting on the first electrode arm (101) due to actuation of the clamping actuator (103).

5. The method of claim 1, wherein the step of adjusting the differential pressure comprises supplying pressurized fluid to at least one of the first or second fluid chambers (206a, 206b).

6. The method of claim 1, wherein the step of adjusting the differential pressure comprises exhausting pressurized fluid from at least one of the first or second fluid chambers (206a, 206b).

7. A welding device (100), comprising:

a reference arm (30);
a first electrode arm (101) and a second electrode arm (102) movable with respect to one another and coupled to a reference arm (30);
a compensation actuator (106) coupled to the first electrode arm (101) and to the reference arm (30) to balance a weight of the first electrode arm (101) and including first and second fluid chambers (206a, 206b); and

**characterised by** :

a control system (250) including a processing system (251) configured to: adjust a differential pressure between the first and second fluid chambers (206a, 206b) of the compensation actuator (106); and
determine a differential balance pressure required to balance the weight of the first electrode arm (101) when the first electrode arm (101) moves by more than a threshold amount, said threshold amount accounting for any small movements not considered significant by the user or by the control system (250).

8. The welding device (100) of claim 7, further comprising a clamping actuator (103) coupled to the first and second electrode arm (101, 102), wherein the processing system (251) is further configured to:

pressurize the compensation actuator (106) to the differential balance pressure;
close off the first and second fluid chambers (206a, 206b) from a pressurized fluid supply (220) and from an exhaust;
actuate the clamping actuator (103) from a first position to a second position; and
determine a clamp pressure based on a change in the differential pressure between the first and second fluid chambers (206a, 206b) of the compensation actuator (106) as the clamping actuator (103) is actuated.

9. The welding device (100) of claim 8, wherein the processing system (251) is further configured to:

pressurize the compensation actuator (106) to the differential balance pressure;
close off the first and second fluid chambers (206a, 206b) from the pressurized fluid supply (220) and the exhaust for a predetermined amount of time;
determine a change in the differential pressure between the first and second fluid chambers (206a, 206b) due to pressurized fluid leakage from the first or the second fluid chamber; and
compensate the clamp pressure for the change in the differential pressure due to pressurized fluid leakage.

10. The welding device (100) of claim 8, wherein the processing system (251) is further configured to:

determine a differential compensation pressure based on the balance pressure and the clamp pressure, the differential compensation pressure comprising the differential pressure required between the first and second fluid chambers (206a, 206b) of the compensation actuator (106) to balance the weight of the first electrode arm plus and additional force acting on the first electrode arm due to actuation of the clamping actuator (103).

11. The welding device (100) of claim 7, wherein the processing system (251) adjusts the differential pressure by supplying pressurized fluid to at least one of the first or second fluid chambers (206a, 206b).

12. The welding device (100) of claim 7, wherein the processing system (251) adjusts the differential pressure by exhausting pressurized fluid from at least one of the first or second fluid chambers (206a, 206b).

**Patentansprüche**

1. Verfahren zum Ausbalancieren eines Elektrodenarms (101, 102) eines Schweißgeräts (100), das einen ersten Elektrodenarm (101) und einen zweiten Elektrodenarm (102), die relativ zueinander beweglich und mit einem Referenzarm (30) verbunden sind, einen mit dem ersten Elektrodenarm (101) und dem Referenzarm (30) verbundenen Kompensationsaktuator (106) zum Ausgleichen eines Gewichts des ersten Elektrodenarms (101) und mit einer ersten und einer zweiten Fluidkammer (206a, 206b), und ein Steuersystem (250) aufweist, wobei das Verfahren durch die folgenden Schritte gekennzeichnet ist:

   Einstellen eines Differenzdrucks zwischen der ersten und der zweiten Fluidkammer (206a, 206b) des Kompensationsaktuators (106); und
   Bestimmen eines Differenzausgleichsdrucks, der erforderlich ist, um das Gewicht des ersten Elektrodenarms (101) auszugleichen, wenn der erste Elektrodenarm (101) sich um mehr als einen Schwellenwert bewegt, wobei der Schwellenwert jegliche kleinen Bewegungen berücksichtigt, die durch einen Benutzer oder durch das Steuersystem (250) nicht als wesentlich betrachtet werden.

2. Verfahren nach Anspruch 1, wobei das Schweißgerät (100) ferner einen mit dem ersten und dem zweiten Elektrodenarm (101, 102) verbundenen Klemmaktuator (103) aufweist, wobei das Verfahren ferner die folgenden Schritte aufweist:

   Unterdrucksetzen des Kompensationsaktuators (106) auf den Differenzausgleichsdruck;
   Absperren der ersten und zweiten Fluidkammer (206a, 206b) von einer Druckfluidzufuhr und von einem Auslass;
   Betätigen des Klemmaktuators (103) von einer ersten Position zu einer zweiten Position; und
   Bestimmen eines Klemmdrucks basierend auf einer Änderung des Differenzdrucks zwischen der ersten und der zweiten Fluidkammer (206a, 206b) des Kompensationsaktuators (106), wenn der Klemmaktuator (103) betätigt wird.

3. Verfahren nach Anspruch 2, ferner mit den Schritten:

   Unterdrucksetzen des Kompensationsaktuators (106) auf den Differenzausgleichsdruck;
   Absperren der ersten und der zweiten Fluidkammer (206a, 206b) von der Druckfluidzufuhr und von dem Auslass für eine vorgegebene Zeitdauer;
   Bestimmen einer Änderung des Differenzdrucks zwischen der ersten und der zweiten Fluidkammer (206a, 206b), die durch aus der ersten oder der zweiten Fluidkammer entweichendes Druckfluid verursacht wird; und
   Kompensieren des Klemmdrucks hinsichtlich der durch entweichendes Druckfluid verursachten Änderung des Differenzdrucks.

4. Verfahren nach Anspruch 2, ferner mit einem Schritt zum Bestimmen eines Differenzkompensationsdrucks basierend auf dem Ausgleichsdruck und dem Klemmdruck, wobei der Differenzkompensationsdruck den zwischen der ersten und der zweiten Fluidkammer (206a, 206b) des Kompensationsaktuators (106) erforderlichen Differenzdruck zum Ausgleichen des Gewichts des ersten Elektrodenarms (101) plus einer zusätzliche Kraft aufweist, die aufgrund einer Betätigung des Klemmaktuators (103) auf den ersten Elektrodenarm (101) wirkt.

5. Verfahren nach Anspruch 1, wobei der Schritt zum Einstellen des Differenzdrucks das Zuführen eines Druckfluids zu der ersten und/oder der zweiten Fluidkammer (206a, 206b) aufweist.

6. Verfahren nach Anspruch 1, wobei der Schritt zum Einstellen des Differenzdrucks das Ausgeben von Druckfluid aus der ersten und/oder der zweiten Fluidkammer (206a, 206b) aufweist.

7. Schweißgerät (100) mit:

   einem Referenzarm (30);
   einem ersten Elektrodenarm (101) und einem zweiten Elektrodenarm (102), die relativ zueinander beweglich und mit einem Referenzarm (30) verbunden sind;
   einem mit dem ersten Elektrodenarm (101) und mit dem Referenzarm (30) verbundenen Kompensationsaktuator (106) zum Ausgleichen eines Gewichts des ersten Elektrodenarms (101) und mit einer ersten und einer zweiten Fluidkammer (206a, 206b); und
   **gekennzeichnet durch**

ein Steuersystem (250) mit einem Verarbeitungssystem (251), das dafür konfiguriert ist:

einen Differenzdruck zwischen der ersten und der zweiten Fluidkammer (206a, 206b) des Kompensationsaktuators (106) einzustellen; und

einen Differenzausgleichsdruck zu bestimmen, der erforderlich ist, um das Gewicht des ersten Elektrodenarms (101) auszugleichen, wenn der erste Elektrodenarm (101) sich um mehr als einen Schwellenwert bewegt, wobei der Schwellenwert jegliche kleinen Bewegungen berücksichtigt, die durch einen Benutzer oder durch das Steuersystem (250) nicht als wesentlich betrachtet werden.

8.  Schweißgerät (100) nach Anspruch 7, ferner mit einem mit dem ersten und dem zweiten Elektrodenarm (101, 102) verbundenen Klemmaktuator (103), wobei das Verarbeitungssystem (251) ferner dafür konfiguriert ist:

den Kompensationsaktuator (106) auf den Differenzausgleichsdruck unter Druck zu setzen;
die erste und die zweite Fluidkammer (206a, 206b) von einer Druckfluidzufuhr und von einem Auslass abzusperren;
den Klemmaktuator (103) von einer ersten Position zu einer zweiten Position zu betätigen; und
einen Klemmdruck basierend auf einer Änderung des Differenzdrucks zwischen der ersten und der zweiten Fluidkammer (206a, 206b) des Kompensationsaktuators (106) zu bestimmen, wenn der Klemmaktuator (103) betätigt wird.

9.  Schweißgerät (100) nach Anspruch 8, wobei das Verarbeitungssystem (251) ferner dafür konfiguriert ist:

den Kompensationsaktuator (106) auf den Differenzausgleichsdruck unter Druck zu setzen;
die erste und die zweite Fluidkammer (206a, 206b) für eine vorgegebene Zeitdauer von einer Druckfluidzufuhr und von einem Auslass abzusperren;
eine Änderung des Differenzdrucks zwischen der ersten und der zweiten Fluidkammer (206a, 206b) zu bestimmen, die durch aus der ersten oder der zweiten Fluidkammer entweichendes Druckfluid verursacht wird; und
den Klemmdruck hinsichtlich der durch entweichendes Druckfluid verursachten Änderung des Differenzdrucks zu kompensieren.

10.  Schweißgerät (100) nach Anspruch 8, wobei das Verarbeitungssystem (251) ferner dafür konfiguriert ist:

einen Differenzkompensationsdruck basierend auf dem Ausgleichsdruck und dem Klemmdruck zu bestimmen, wobei der Differenzkompensationsdruck den zwischen der ersten und der zweiten Fluidkammer (206a, 206b) des Kompensationsaktuators (106) erforderlichen Differenzdruck zum Ausgleichen des Gewichts des ersten Elektrodenarms (101) plus einer zusätzlichen Kraft aufweist, die aufgrund einer Betätigung des Klemmaktuators (103) auf den ersten Elektrodenarm (101) wirkt.

11.  Schweißgerät (100) nach Anspruch 7, wobei das Verarbeitungssystem (251) den Differenzdruck durch Zuführen von Druckfluid zu der ersten und/oder der zweiten Fluidkammer (206a, 206b) einstellt.

12.  Schweißgerät (100) nach Anspruch 7, wobei das Verarbeitungssystem (251) den Differenzdruck durch Ausgeben von Druckfluid aus der ersten und/oder der zweiten Fluidkammer (206a, 206b) einstellt.

**Revendications**

1.  Procédé d'équilibrage d'un bras d'électrode (101, 102) d'un dispositif de soudage (100) comprenant un premier bras d'électrode (101) et un second bras d'électrode (102) mobiles l'un par rapport à l'autre et couplés à un bras de référence (30), et un actionneur de compensation (106) couplé au premier bras d'électrode (101) et au bras de référence (30) pour équilibrer un poids du premier bras d'électrode (101) et comprenant des première et seconde chambres de fluide (206a, 206b), et un système de commande (250), le procédé étant **caractérisé en ce qu'**il comprend les étapes suivantes :

le réglage d'une pression différentielle entre les première et seconde chambres de fluide (206a, 206b) de l'actionneur de compensation (106) ; et
la détermination d'une pression d'équilibre différentielle requise pour équilibrer le poids du premier bras d'électrode (101), lorsque le premier bras d'électrode (101) se déplace de plus d'une quantité seuil, ladite quantité seuil correspondant à d'éventuels petits déplacements non considérés comme significatifs par l'utilisateur ou par le système de commande (250).

2. Procédé selon la revendication 1, dans lequel le dispositif de soudage (100) comprend en outre un actionneur de serrage (103) couplé aux premier et second bras d'électrode (101, 102), le procédé comprenant en outre les étapes suivantes :

la mise en pression de l'actionneur de compensation (106) à la pression d'équilibre différentielle ;
la coupure des première et seconde chambres de fluide (206a, 206b) d'une alimentation de fluide sous pression et d'un échappement ;
l'actionnement de l'actionneur de serrage (103) d'une première position vers une seconde position ; et
la détermination d'une pression de serrage sur la base d'une modification de la pression différentielle entre les première et seconde chambres de fluide (206a, 206b) de l'actionneur de compensation (106) lorsque l'actionneur de serrage (103) est actionné.

3. Procédé selon la revendication 2, comprenant en outre les étapes suivantes :

la mise en pression de l'actionneur de compensation (106) à la pression d'équilibre différentielle ;
la coupure des première et seconde chambres de fluide (206a, 206b) de l'alimentation de fluide sous pression et de l'échappement pendant une durée prédéterminée ;
la détermination d'une modification de la pression différentielle entre les première et seconde chambres de fluide (206a, 206b) due à une fuite de fluide sous pression de la première ou de la seconde chambre de fluide ; et
la compensation de la pression de serrage pour la modification de la pression différentielle due à une fuite de fluide sous pression.

4. Procédé selon la revendication 2, comprenant en outre une étape de détermination d'une pression de compensation différentielle sur la base de la pression d'équilibre et de la pression de serrage, la pression de compensation différentielle comprenant la pression différentielle requise entre les première et seconde chambres de fluide (206a, 206b) de l'actionneur de compensation (106) pour équilibrer le poids du premier bras d'électrode (101) ainsi qu'une force supplémentaire agissant sur le premier bras d'électrode (101) du fait de l'actionnement de l'actionneur de serrage (103).

5. Procédé selon la revendication 1, dans lequel l'étape de réglage de la pression différentielle comprend l'alimentation en fluide sous pression d'au moins une des première ou seconde chambres de fluide (206a, 206b).

6. Procédé selon la revendication 1, dans lequel l'étape de réglage de la pression différentielle comprend l'évacuation de fluide sous pression d'au moins une des première ou seconde chambres de fluide (206a, 206b).

7. Dispositif de soudage (100), comprenant :

un bras de référence (30) ;
un premier bras d'électrode (101) et un second bras d'électrode (102) mobiles l'un par rapport à l'autre et couplés à un bras de référence (30) ;
un actionneur de compensation (106) couplé au premier bras d'électrode (101) et au bras de référence (30) pour équilibrer un poids du premier bras d'électrode (101) et comprenant des première et seconde chambres de fluide (206a, 206b) ; et **caractérisé par** :

un système de commande (250) comprenant un système de traitement (251) configuré pour :

régler une pression différentielle entre les première et seconde chambres de fluide (206a, 206b) de l'actionneur de compensation (106) ; et
déterminer une pression d'équilibre différentielle requise pour équilibrer le poids du premier bras d'électrode (101) lorsque le premier bras d'électrode (101) se déplace de plus d'une quantité seuil, ladite quantité seuil correspondant à d'éventuels petits déplacements non considérés comme significatifs par l'utilisateur ou par le système de commande (250).

8. Dispositif de soudage (100) selon la revendication 7, comprenant en outre un actionneur de serrage (103) couplé aux premier et second bras d'électrode (101, 102), dans lequel le système de traitement (251) est en outre configuré pour :

mettre en pression l'actionneur de compensation (106) à la pression d'équilibre différentielle ;
couper les première et seconde chambres de fluide (206a, 206b) d'une alimentation de fluide sous pression (220) et d'un échappement ;
actionner l'actionneur de serrage (103) d'une première position vers une seconde position ; et
déterminer une pression de serrage sur la base d'une modification de la pression différentielle entre les première et seconde chambres de fluide (206a, 206b) de l'actionneur de compensation (106) lorsque l'actionneur de serrage (103) est actionné.

9. Dispositif de soudage (100) selon la revendication 8, dans lequel le système de traitement (251) est en outre configuré pour :

mettre en pression l'actionneur de compensation (106) à la pression d'équilibre différentielle ;
couper les première et seconde chambres de fluide (206a, 206b) de l'alimentation de fluide sous pression (220) et de l'échappement pendant une durée prédéterminée ;
déterminer une modification de la pression différentielle entre les première et seconde chambres de fluide (206a, 206b) due à une fuite de fluide sous pression de la première ou de la seconde chambre de fluide ; et
compenser la pression de serrage pour la modification de la pression différentielle due à une fuite de fluide sous pression.

10. Dispositif de soudage (100) selon la revendication 8, dans lequel le système de traitement (251) est en outre configuré pour :

déterminer une pression de compensation différentielle sur la base de la pression d'équilibre et de la pression de serrage, la pression de compensation différentielle comprenant la pression différentielle requise entre les première et seconde chambres de fluide (206a, 206b) de l'actionneur de compensation (106) pour équilibrer le poids du premier bras d'électrode ainsi qu'une force supplémentaire agissant sur le premier bras d'électrode du fait de l'actionnement de l'actionneur de serrage (103).

11. Dispositif de soudage (100) selon la revendication 7, dans lequel le système de traitement (251) règle la pression différentielle en alimentant en fluide sous pression au moins une des première ou seconde chambres de fluide (206a, 206b).

12. Dispositif de soudage (100) selon la revendication 7, dans lequel le système de traitement (251) règle la pression différentielle en évacuant du fluide sous pression d'au moins une des première ou seconde chambres de fluide (206a, 206b).

FIG. 1

FIG. 2

FIG. 3

FIG. 4

FIG. 5

600

START

DETERMINE
BALANCE PRESSURE — 601

DETERMINE CLAMP
PRESSURE — 602

DETERMINE DIFFERENTIAL
COMPENSATION
PRESSURE — 603

END

FIG. 6

**EP 2 621 660 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1830979 A
- WO 2006066528 A1
- US 4810849 A